Europäisches Patentamt

European Patent Office

Office européen des brevets

(11) Numéro de publication : **0 158 551**
**B1**

(12) **FASCICULE DE BREVET EUROPÉEN**

(45) Date de publication du fascicule du brevet :
28.09.88

(21) Numéro de dépôt : **85400475.1**

(22) Date de dépôt : **12.03.85**

(51) Int. Cl.⁴ : **G 02 B 26/02**, G 02 B 6/28

(54) **Dispositif à commande électrique de déplacement d'un fluide.**

(30) Priorité : **16.03.84 FR 8404107**

(43) Date de publication de la demande :
**16.10.85 Bulletin 85/42**

(45) Mention de la délivrance du brevet :
**28.09.88 Bulletin 88/39**

(84) Etats contractants désignés :
**DE GB NL SE**

(56) Documents cités :
**EP-A- 0 124 386**
**US-A- 3 622 226**
**US-A- 4 418 346**

(73) Titulaire : **THOMSON-CSF**
**173, Boulevard Haussmann**
**F-75379 Paris Cédex 08 (FR)**

(72) Inventeur : **Le Pesant, Jean-Pierre**
**THOMSON-CSF SCPI 173, bld Haussmann**
**F-75379 Paris Cedex 08 (FR)**
Inventeur : **Hareng, Michel**
**THOMSON-CSF SCPI 173, bld Haussmann**
**F-75379 Paris Cedex 08 (FR)**
Inventeur : **Mourey, Bruno**
**THOMSON-CSF SCPI 173, bld Haussmann**
**F-75379 Paris Cedex 08 (FR)**

(74) Mandataire : **Lepercque, Jean et al**
**THOMSON-CSF SCPI 19, avenue de Messine**
**F-75008 Paris (FR)**

Jouve, 18, rue St-Denis, 75001 Paris, France

## Description

L'invention concerne un dispositif à commande électrique de déplacement d'un fluide utilisable notamment dans des dispositifs d'affichage de données numériques ainsi que dans des dispositifs de commutation de faisceaux lumineux.

De tels dispositifs comportent essentiellement un espace capillaire délimité par deux plaques parallèles porteuses de couples d'électrodes. Le remplissage partiel de cet espace capillaire permet de disposer d'une phase globulaire dont les éléments fluides peuvent évoluer au sein d'une phase lacunaire. L'évolution est commandée électriquement en appliquant des tensions électriques aux couples d'électrodes. Grâce à une différence de permittivité électrique entre les deux phases fluides et aux gradients de champ électriques qui résultent des tensions appliquées, la polarisation électrique donne naissance à des forces permettant de déplacer les éléments fluides dans l'étendue du volume capillaire. Plus précisément, un globule fluide présentant une permittivité électrique supérieure à son environnement sera attiré vers un couple d'électrodes siège d'une tension électrique. Par le jeu des forces de tension superficielles, ce globule tend à conserver son individualité et en admettant qu'il soit totalement libre, on peut se le représenter comme une goutte circulaire aplatie entre les deux plaques. L'étalement d'une telle goutte est constant dans le cas d'un espace capillaire de hauteur uniforme. Pour entraver le moins possible le déplacement d'un élément fluide, les faces de contact des plaques doivent offrir une faible mouillabilité que l'on obtient par un traitement approprié.

La demande de brevet EP-A 0 124 386 déposée par la demanderesse décrit un tel dispositif utilisable notamment pour la visualisation de données numériques.

Le même type de dispositif à commande électrique de déplacement d'un fluide peut être utilisé dans des dispositifs de commutation de faisceaux lumineux notamment pour la commutation de lumière entre fibres optiques. De tels dispositifs ont été décrits dans les demandes de brevets déposées par la demanderesse EP-A-0 136 199 et EP-A-0 143 031.

Ces dispositifs sont caractérisés en ce que les moyens commutateurs consistent à placer sur le trajet d'un faisceau lumineux à commuter soit un premier fluide provoquant la réflexion du faisceau, soit un second fluide provoquant sa transmission. Ces fluides sont contenus dans un espace capillaire défini par des éléments transparents et ne sont pas miscibles. De plus, ces fluides possèdent des permittivités diélectriques distinctes, l'un desdits fluides ayant une structure globulaire noyée dans la structure lacunaire de l'autre fluide. Le dispositif de commutation comprend également des moyens inducteurs d'un gradient de champ électrique faisant converger le fluide ayant la plus forte permittivité vers une région de l'espace capillaire soumise au champ électrique.

Les moyens inducteurs comprennent un premier couple d'électrodes situées en vis-à-vis de part et d'autre de l'espace capillaire et un deuxième couple d'électrodes voisines des premières et également situées en vis-à-vis de part et d'autre de l'espace capillaire. Le fonctionnement du dispositif est tel qu'un globule de fluide de forte permittivité est déplacé de la zone de l'espace capillaire comprise entre les électrodes du premier couple vers la zone de l'espace capillaire comprise entre les électrodes du deuxième couple, et vice versa, selon les tensions appliquées aux électrodes.

Pour que le déplacement d'un globule de fluide se fasse aisément, il convient que les deux couples d'électrodes soient suffisamment proches selon l'intensité des champs électriques appliqués. De plus, pour faciliter le déplacement d'un globule, les électrodes possèdent des indentations complémentaires. On peut alors constater l'existence d'un reflux d'un film mince sur les parois de l'espace capillaire, dû à un gradient de champ électrique. Cela peut se produire notamment dans le cas de globules de liquides à faible tension superficielle et faible viscosité tels que les hydrocarbures de faible poids moléculaire.

La formation d'un tel film mince dégrade considérablement les qualités optiques, l'état de poli notamment, des surfaces utilisées pour obtenir la réflexion totale des faisceaux à commuter.

L'invention fournit une solution permettant d'éviter la formation d'un film mince sur la face de l'espace capillaire servant à la réflexion d'un faisceau lumineux, et remédie ainsi à l'inconvénient décrit précédemment.

L'invention concerne donc un dispositif de commutation optique d'un faisceau lumineux incident par déplacement d'un fluide, comportant une première face inclinée par rapport au faisceau lumineux incident d'une pièce d'entrée transparente, cette première face constituant une surface de réflexion pour le faisceau lumineux incident, une deuxième face d'une pièce de sortie, lesdites première et deuxième faces étant sensiblement parallèles et délimitant un espace capillaire contenant au moins un premier fluide et un deuxième fluide non miscibles entre eux, de permittivités électriques et d'indices de réfraction différents, la première face et la deuxième face comportant chacune, en vis-à-vis, de part et d'autre de l'espace capillaire, au moins deux électrodes de commande reliées chacune à un générateur électrique de commande, caractérisé en ce que les électrodes de la première face sur laquelle doit se faire des réflexions lumineuses, sont connectées à un même niveau de potentiel.

L'invention sera mieux comprise et d'autres avantages apparaîtront au moyen de la description qui va suivre et des figures annexées parmi lesquelles :

— les figures 1 et 2 représentent schématiquement un dispositif de commutation optique selon l'art connu ;

— la figure 3 représente schématiquement un autre dispositif de commutation optique connu dans la technique ;

— la figure 4 représente un dispositif de commutation optique selon l'invention ;

— la figure 5 représente un exemple d'électrodes selon l'art connu ;

— la figure 6 représente un exemple de réalisation d'électrodes selon l'invention ;

— les figures 7 et 8 représentent des variantes de réalisation d'électrodes selon l'invention.

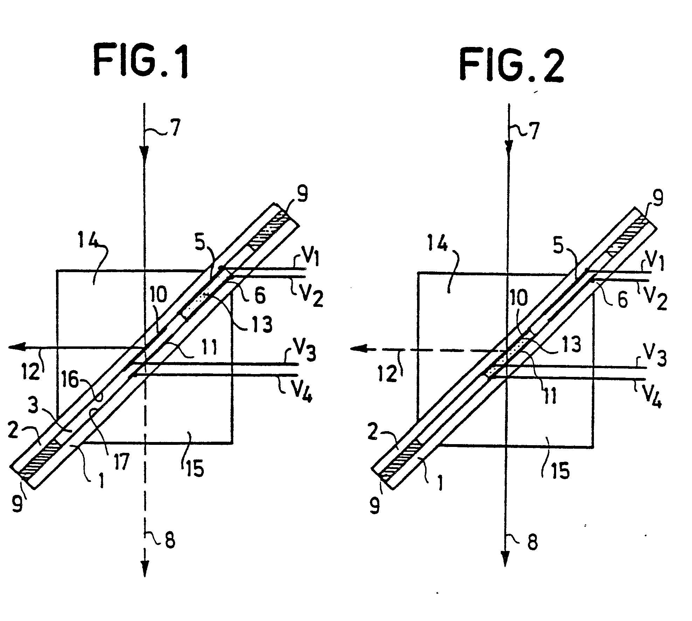

En se reportant aux figures 1 et 2 on va décrire un dispositif de commutation selon l'art connu. Ce dispositif comporte deux lames 1 et 2 transparentes séparées par des entretoises 9. Elles délimitent ainsi un espace capillaire 3. Sur les faces 16 et 17 des lames 1 et 2, délimitant cet espace capillaire 3, sont déposées en vis-à-vis deux groupes d'électrodes 5-6 et 10-11. Un générateur électrique non représenté fournit à la demande des différences de potentiel sur les fils $V_1$ et $V_2$, vers les électrodes 5-6, d'une part, et $V_3$ et $V_4$, vers les électrodes 10-11 d'autre part. Ces différences de potentiel peuvent être de l'ordre de 10 à 300 volts pour créer des champs électriques de l'ordre de $5.10^5$ à $10^8$ volts par mètre.

Dans l'espace capillaire 3 est placé un globule de fluide 13. Le reste de l'espace capillaire est rempli d'un deuxième fluide, de l'air par exemple. Le globule 13 peut donc se déplacer dans l'espace capillaire 3.

La nature du fluide du globule 13 peut être choisie parmi les hydrocarbures tels que des alcanes comprenant 5 à 25 atomes de carbone, des cétones (acétone, cyclohexanone, méthyléthylcétone) ou des dérivés nitrés (nitrobenzène, nitrotoluène), avec un indice de réfraction compris, par exemple, entre 1,4 et 1,7.

L'utilisation de mélanges de liquides pour constituer le fluide 13 permet de contrôler la tension superficielle, d'éviter la dislocation des globules lors de leur déplacement et d'optimiser le temps de réponse du dispositif aux commandes électriques.

Le globule 13 se trouve pincé entre les lames 1 et 2. Son volume est tel que placé entre les électrodes 5 et 6, comme représenté sur la figure 1, il déborde légèrement le contour des électrodes. Il pourrait également être plus volumineux et empiéter sur le couple d'électrodes 10 et 11.

Sur les faces extérieures des plaques 1 et 2 sont collés des prismes à réflexion totale 14 et 15. Un faisceau lumineux 7 est envoyé sous incidence oblique en direction de l'électrode 10. L'obliquité du faisceau 7 est choisie de façon à permettre la possibilité d'une réflexion totale sur la face interne 16 de la lame 2. Le faisceau 7 traverse le prisme 14 et parvient sur la face interne de la lame 2. Deux cas peuvent alors se produire suivant la nature du fluide compris entre les électrodes 10 et 11.

Le faisceau 7 est réfléchi en un faisceau 12 lorsque le volume contrôlé par les électrodes 10 et 11 est occupé par un gaz tel que l'air dont l'indice de réfraction optique est de l'ordre de 1, alors que celui du verre de la lame 2 est de l'ordre de 1,5. C'est ce qui est représenté par la figure 1.

Si le volume contrôlé par les électrodes 10 et 11 est occupé par le globule 13 initialement situé entre les électrodes 5 et 6, l'indice de réfraction de cette région passe à une valeur qui est comprise entre 1,4 et 1,7. Dans ces conditions, la réflexion totale sur la face interne de la lame de verre 2 est supprimée et le faisceau 7 est transmis en un faisceau 8 comme le montre la figure 2.

Pour faire passer le globule 13 de l'espace inter-électrodes 5-6 à l'espace inter-électrodes 10-11, on applique aux électrodes 10-11 une différence de potentiel V3-V4 supérieure à la différence de potentiel V1-V2. Pour faire revenir le globule à sa position d'origine on effectue l'opération inverse. Si des différences de potentiel égales sont appliquées en même temps, ou si aucune différence de potentiel n'est appliquée, le globule 13 ne tend pas à se déplacer.

Sans excitation électrique, le globule reste donc dans la position où il se trouve, comme représenté en figure 1 par exemple, le faisceau 7 est réfléchi en un faisceau 12. Lorsqu'on applique une différence de potentiel entre les électrodes 10 et 11 et que le champ électrique qui y est alors induit est suffisant, le globule vient se placer entre ces électrodes et y restera après suppression du champ électrique (c'est le cas de la figure 2). Le faisceau 7 est alors transmis en un faisceau 8. Pour que le globule reparte entre les électrodes 5 et 6, il faut inverser le processus de commande. C'est donc bien d'un dispositif de commutation optique à commande électrique dont on dispose.

Ce dispositif est formé de l'association de plusieurs éléments qui déterminent des interfaces permettant des réflexions. Sur la figure 1, la réflexion se fait sur la face interne 16 de la plaque 2. Cette face a donc subi tout spécialement une préparation qui consiste en des nettoyages appropriés et des dépôts de surface qui doivent contrarier la formation de films capillaires par le liquide dont on souhaite contrôler électriquement le déplacement.

Pour obtenir un déplacement efficace et rapide du fluide de plus haute permittivité, il est avantageux de réduire la distance qui sépare les électrodes de commande. De plus, comme cela est décrit dans la demande de brevet EP-A-131 493, il est avantageux de donner aux bords des électrodes situés en regard, une forme dentelée qui augmente les gradients de champ électrique et permet d'utiliser la relaxation du périmètre du fluide à déplacer, vers une longueur minimum. Cette relaxation du périmètre du fluide se produit quand le champ électrique est interrompu sur un couple donné d'électrodes, et conduit le fluide à déborder sur les indentations des électrodes voisines, lorsqu'on a donné à ces indentations une longueur et une configuration convenables. L'application d'un champ électrique entre les électrodes sur lesquelles déborde le fluide permet alors de déplacer celui-ci rapidement.

L'inconvénient d'utiliser des intervalles faibles et des indentations entre électrodes est précisément l'établissement d'intenses gradients de champ électrique qui non seulement permettent le déplacement rapide du fluide, mais aussi provoquent un reflux d'un film mince, particulièrement dans le cas de liquides à faible tension superficielle et faible viscosité, tel que les hydrocarbures de faible poids moléculaire.

La formation d'un tel film mince dégrade l'état de surface de la face interne de la lame 2 et détériore la qualité de la réflexion du faisceau 7 lorsque le globule 13 est dans la position indiquée sur la figure 1. L'image fournie par le faisceau 12 ne représente plus alors une image nette du faisceau 7.

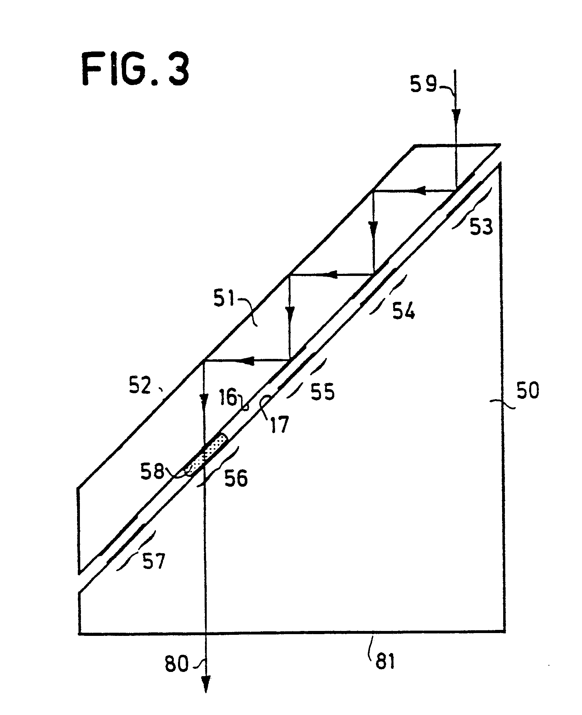

Les problèmes de détérioration du faisceau sont encore plus graves lorsque le faisceau doit subir plusieurs réflexions successives. C'est ainsi que la demande de brevet EP-A-143 031 décrit une structure de commutateur optique en cascade tel que représenté sur la figure 3. Cette structure est formée par l'association de deux prismes à réflexion totale agencés de façon à satisfaire les conditions de propagation d'un faisceau lumineux comme il a été défini plus haut. Le prisme 50 et le prisme 51 dont le sommet a été tronqué et dont la face 52 a été polie, définissent un espace capillaire où un fluide est susceptible d'être déplacé par commande électrique. A cet effet, des électrodes, disposées par couples, sont gravées sur les faces internes des prismes. Pour une structure à cinq sorties, il faut disposer de cinq couples d'électrodes 53, 54, 55, 56 et 57. Par commande électrique, un globule diélectrique 58 peut être déplacé successivement d'un couple d'électrodes à un autre couple pour aboutir entre le couple d'électrodes situé sur le trajet voulu du faisceau lumineux. La figure 3 montre un exemple de commutation possible pour un faisceau lumineux 59 entrant perpendiculairement à une face du prisme 51 et dont les conditions de réflexion totale sur la face interne 16 de ce prisme sont respectées. Le faisceau lumineux subit une cascade de réflexions sur la face interne 16 du prisme 51 et sur sa face 52 qui satisfait également aux conditions de réflexion totale. Le faisceau lumineux est transmis lorsque la continuité des indices de réfraction des milieux qu'il rencontre est assurée. C'est ainsi qu'il traverse le globule 58 situé entre les faces 16 et 17, au niveau du couple d'électrodes 56, pour constituer un faisceau 80 qui sort perpendiculairement à la face 81 du prisme 50.

On voit donc que si un film de fluide se forme sur la face interne 16 du prisme 51, on risque d'avoir une détérioration du faisceau à chaque réflexion du faisceau. Toutes les détériorations s'additionneraient et le faisceau 80 serait fortement déformé.

L'invention fournit une solution permettant d'éviter les défauts de réflexion ainsi décrits.

Selon l'invention, toutes les électrodes de commande transparentes, situées sur la face 16 où se fait la réflexion totale, sont reliées à un même potentiel, la masse par exemple. De cette façon, on évite sur cette face l'établissement de gradients de champ électrique qui entraîneraient, par électro-capillarité et électro-mouillage, le reflux du film mince dont on cherche à éviter la formation.

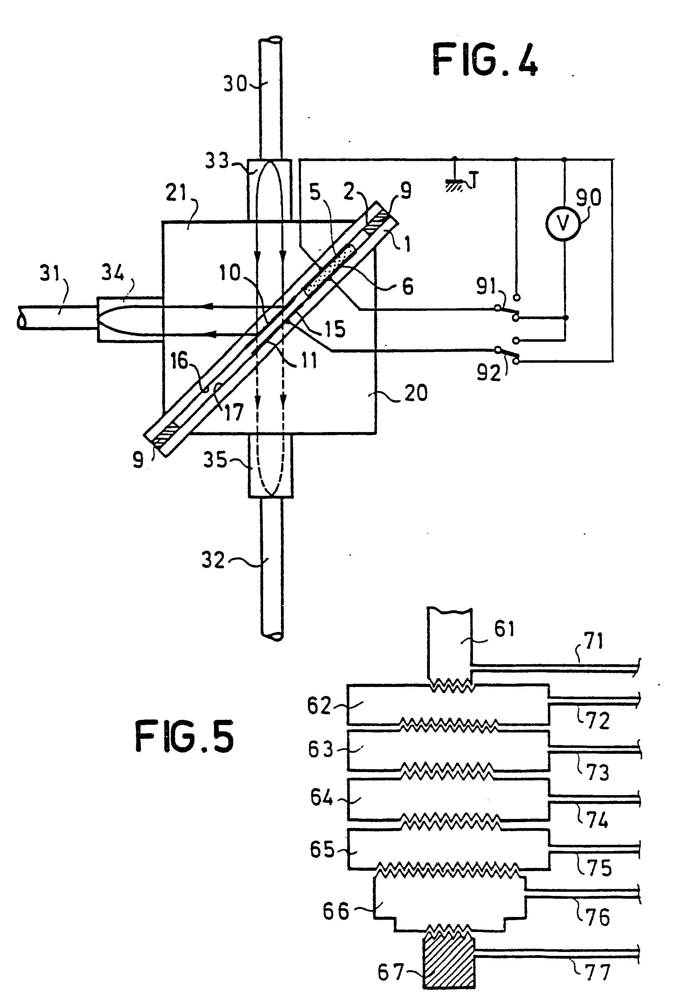

Sur la figure 4, on a représenté un exemple de circuit permettant de commander un dispositif de commutation.

Les électrodes 5 et 10 situées côte à côte sur la face de réflexion 16 du dispositif sont interconnectées.

Les électrodes 5 et 6 sont alimentées par un générateur de tension 90 entre la terre T et un potentiel V fourni par un commutateur 91.

Les électrodes 10 et 11 peuvent être de même alimentées par le générateur de tension 90 entre la terre T et un potentiel V fourni par un commutateur 92.

Un faisceau lumineux véhiculé par une fibre optique 30 et une lentille 33 est réfléchi par la face interne 16 de la lame 2 vers une lentille 34 et une fibre de sortie 31.

Les électrodes 5 et 10 étant au même potentiel le gradient de champ électrique à leur voisinage est nul et la formation d'un film de fluide est évitée à la surface de l'électrode 10.

Selon un exemple de réalisation des électrodes tel que décrit dans la demande de brevet EP-A-136 193, il est prévu de concevoir le déplacement d'un globule de fluide d'un espace interélectrodes 5-6 par exemple, vers un autre espace interélectrodes 10-11 par exemple, à l'aide d'un ensemble d'électrodes tel que représenté en figure 5.

Il est en effet avantageux de donner aux électrodes une géométrie qui permette un déplacement rapide et efficace des globules. La figure 5 montre un exemple de géométrie d'électrodes qui permet de former un globule de liquide dans une région particulière du dispositif où on désire modifier les conditions de propagation d'un faisceau lumineux par exemple dans la zone hachurée. Un élément de commutation optique peut être obtenu en plaçant en face deux tels ensembles d'électrodes. Sur la figure 5 par exemple, on a représenté un ensemble d'électrodes de la face 16 d'un dispositif tel que précédemment décrit. Cet ensemble est constitué de sept plots conducteurs référencés de 61 à 67 qui sont reliés à des générateurs de tensions par l'intermédiaire d'autant de conducteurs référencés de 71 à 77. Les liaisons aux générateurs se font de telle sorte qu'une différence de potentiel peut se manifester entre des plots situés en vis-à-vis sur les faces 16 et 17 d'un dispositif de commutation. Les plots 61 à 66 et les plots correspondants situés en regard permettent le contrôle des volumes qui servent de réservoirs de liquide. Le plot 67 et celui qui lui fait face permettent le déplacement du liquide sur le trajet d'un faisceau lumineux incident par application d'une différence de potentiel appropriée, donc d'un champ électrique. Lorsque l'on supprime la différence de potentiel entre ces plots et qu'on applique une différence de potentiel entre les plots 61 à 66 et ceux qui leur font face, les forces de tension superficielle et les forces dues aux champs électriques jouent le rôle de forces de rappel et entraînent le retrait du liquide hors du trajet du faisceau lumineux. Ce retrait est complet et rapide lorsque les volumes définis par les plots 61 à 66 et leur vis-à-vis ne sont que partiellement remplis. Les valeurs des différences de potentiel entre les plots de retrait du liquide peuvent être identiques ou échelonnées.

Pour améliorer encore le transfert des fluides sous l'influence d'un gradient de champ électrique, il est avantageux que les différents plots se succèdent en présentant des indentations. Sur la figure 5, les indentations sont en forme de dents de scie. Les plots étant, par l'intermédiaire de leurs indentations, encastrés les uns dans les autres, le transfert des globules est sensiblement facilité.

Selon l'invention, les conducteurs 71 à 77 des électrodes situées sur la face 16 de la lame 2 du dispositif de commutation seront connectées à un même potentiel, tandis que les électrodes situées sur la lame 1 seront alimentées par des potentiels différents selon les déplacements que l'on désire imposer au globule de fluide.

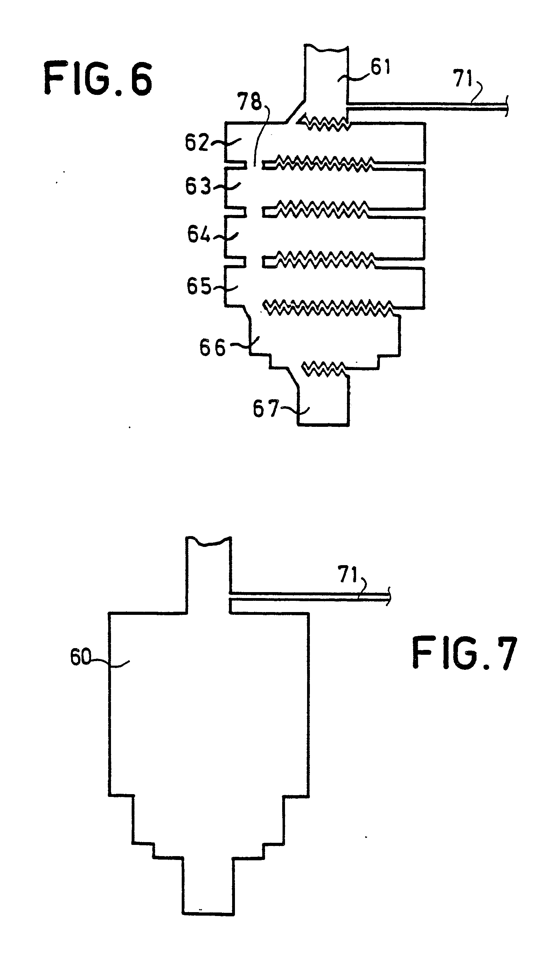

Selon une variante de l'invention, représentée par la figure 6, les différentes électrodes de la face 16 de la lame 2 sont reliées les unes aux autres par des connexions telles que la connexion 78 pour les électrodes 62 et 63. Les différentes électrodes de cette lame sont alors alimentées par un seul conducteur 71. Les électrodes de la face 17 de la lame 1 sont réalisées comme celles de la figure 5 et le système fonctionne de la même façon que précédemment.

Selon une autre variante de l'invention, représentée par la figure 7, les électrodes de la lame 2 sont réalisées en une seule électrode 60 alimentée par un conducteur 71. Cette électrode 60 a une forme correpondant au contour général de toutes les électrodes de la lame 1. Cette variante permet éventuellement de simplifier la réalisation de la lame 2.

Enfin, l'électrode de la lame 2 peut recouvrir tout ou partie de la face de la lame, débordant alors largement par rapport au contour général des électrodes de la lame 1.

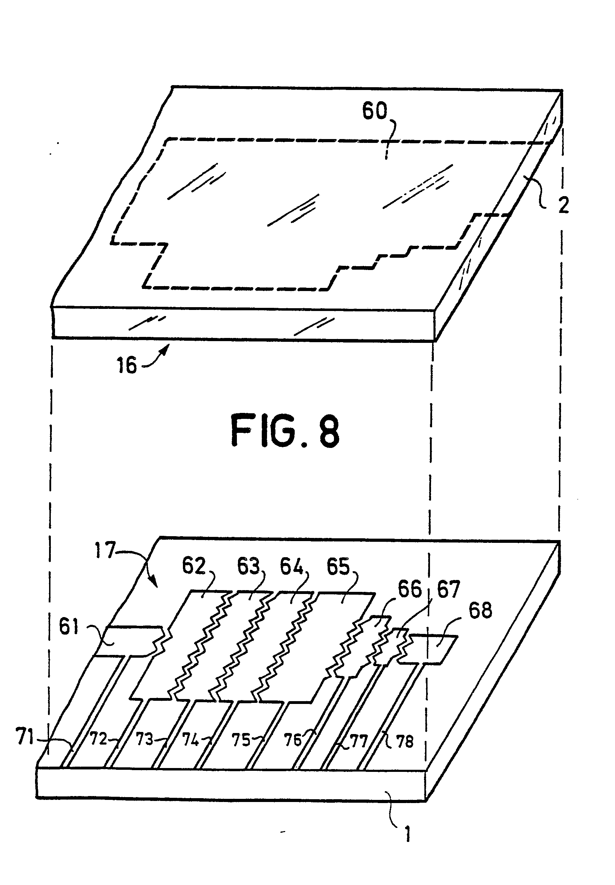

Par exemple comme représenté sur la figure 8, représentant les deux lames 1 et 2, le côté de l'électrode 60 de la lame 2, en correspondance avec les conducteurs 71 à 78 de la lame 1, épouse la forme extérieure des électrodes 61 à 68. Par contre, du côté opposé, la face de la lame 2 est entièrement métallisée.

### Revendications

1. Dispositif de commutation optique d'un faisceau lumineux incident par déplacement d'un fluide, comportant une première face (16) inclinée par rapport au faisceau lumineux incident (7) d'une pièce d'entrée (2) transparente, cette première face (16) constituant une surface de réflexion pour le faisceau lumineux incident, une deuxième face (17) d'une pièce de sortie (1), lesdites première et deuxième faces étant sensiblement parallèles et délimitant un espace capillaire (3) contenant au moins un premier fluide (13) et un deuxième fluide non miscibles entre eux, de permittivités électriques et d'indices de réfraction différents, la première face (16) et la deuxième face (17) comportant chacune, en vis-à-vis, de part et d'autre de l'espace capillaire, au moins deux électrodes de commande (5, 10 et 6, 11) reliées chacune à un générateur électrique de commande, caractérisé en ce que les électrodes (5, 10) de la première face (16) sur laquelle doit se faire des réflexions lumineuses, sont connectées à un même niveau de potentiel.

2. Dispositif de commutation selon la revendication 1, caractérisé en ce que la première face (16) comporte des liaisons conductrices (78) reliant entre elles les différentes électrodes (62, 63) de ladite première face (16).

3. Dispositif de commutation selon la revendication 1, caractérisé en ce que la deuxième face (17) comporte plusieurs électrodes indépendantes (61 à 67) et que la première face (16) comporte une seule électrode (60) dont le contour correspond au contour de l'ensemble des électrodes de la deuxième face.

4. Dispositif de commutation selon la revendication 1, caractérisé en ce que la deuxième face (17) comporte plusieurs électrodes indépendantes (61 à 67) et que la première face (16) comporte une seule électrode (60) la recouvrant entièrement sauf dans la zone correspondant aux conducteurs de commande des électrodes de la deuxième face.

5. Dispositif de commutation selon la revendication 1, caractérisé en ce que la deuxième face (17) comporte plusieurs électrodes indépendantes (61 à 67) et que la première face (16) comporte une seule électrode (60) la recouvrant entièrement.

6. Dispositif de commutation selon la revendication 1, caractérisé en ce que ledit niveau de potentiel est de valeur nulle.

### Claims

1. An apparatus for optically switching an incident light beam by displacement of a fluid, comprising a first face (16) of a transparent entry component (2), inclined in relation to the incident light beam (7), the first face (16) being adapted to constitute a reflection surface for the incident light beam, and comprising a second face (17) of an exit component (1), said first and second faces being substantially parallel to one another and delimiting a capillary space (3) containing at least a first fluid (13) and a second fluid, the fluids being immiscible with one another and having different dielectric constants as well as refraction indices, the first face (16) and the second face (17) each comprising, disposed face to face and on both sides of the capillary space, at least two control electrodes (5, 10 and 6, 11), each connected to an electric control generator, characterized in that the electrodes (5, 10) of the first face (16), whereupon light reflections are intended to take place, are connected to a common potential level.

2. A switching apparatus according to claim 1, characterized in that the first face (16) comprises conducting connection lines (78) adapted to interconnect the various electrodes (62, 63) of the first face with each other.

3. A switching apparatus according to claim 1, characterized in that the second face (17) comprises several independent electrodes (61 to 67) and that the first face (16) comprises a sole electrode (60), the contour of which corresponds to the contour of the unit of electrodes of the second face.

4. A switching apparatus according to claim 1, characterized in that the second face (17) comprises several independent electrodes (61 to 67) and that the first face (16) comprises a sole electrode (60) covering this face entirely except the zone corresponding to the control conductors of the electrodes of the second face.

5. A switching apparatus according to claim 1, characterized in that the second face (17) comprises several independent electrodes (61 to 67) and that the first face (16) comprises a sole electrode (60) covering this face entirely.

6. A switching apparatus according to claim 1, characterized in that said potential level is zero.

**Patentansprüche**

1. Vorrichtung zur optischen Umschaltung eines einfallenden Lichtstrahls durch Verschiebung eines Fluids, mit einer ersten, in bezug auf den einfallenden Lichtstrahl (7) geneigten Fläche (16) eines transparenten Eintrittselements (17), die eine Reflexionsfläche für den einfallenden Lichtstrahl bildet, mit einer zweiten Fläche (17) eines Austrittselements (1), wobei die erste und die zweite Fläche im wesentlichen parallel liegen und einen Kapillarraum (3) begrenzen, der mindestens ein erstes Fluid (13) und ein zweites Fluid enthält, die beide nicht miteinander mischbar sind und verschiedene Dielektrizitätskonstanten sowie Brechungsindices besitzen, und wobei die erste Fläche (16) und die zweite Fläche (17) jeweils einander gegenüberliegend zu beiden Seiten des Kapillarraums mindestens zwei Steuerelektroden (5, 10 und 6, 11) aufweisen, die je an einen elektrischen Steuergenerator angeschlossen sind, dadurch gekennzeichnet, daß die Elektroden (5, 10) der ersten Fläche (16), an der Lichtreflexionen stattfinden sollen, an ein gleiches Potentialniveau angeschlossen sind.

2. Umschaltvorrichtung nach Anspruch 1, dadurch gekennzeichnet, daß die erste Fläche (16) Leitungsverbindungen (78) aufweist, welche die verschiedenen Elektroden (62, 63) der ersten Fläche (16) miteinander verbinden.

3. Umschaltvorrichtung nach Anspruch 1, dadurch gekennzeichnet, daß die zweite Fläche (17) mehrere unabhängige Elektroden (61 bis 67) umfaßt, und daß die erste Fläche (16) eine einzige Elektrode (60) aufweist, deren Umriß den Umriß der Gesamtheit der Elektroden der zweiten Fläche entspricht.

4. Umschaltvorrichtung nach Anspruch 1, dadurch gekennzeichnet, daß die zweite Fläche (17) mehrere unabhängige Elektroden (61 bis 67) umfaßt, und daß die erste Fläche (16) eine einzige Elektrode (60) aufweist, welche sie ganz bedeckt, mit Ausnahme der Zone, die den Steuerleitungen der Elektroden der zweiten Fläche entspricht.

5. Umschaltvorrichtung nach Anspruch 1, dadurch gekennzeichnet, daß die zweite Fläche (17) mehrere unabhängige Elektroden (61 bis 67) umfaßt, und daß die erste Fläche (16) eine einzige Elektrode (60) aufweist, welche sie ganz bedeckt.

6. Umschaltvorrichtung nach Anspruch 1, dadurch gekennzeichnet, daß das Potentialniveau den Wert Null hat.

# FIG.1

# FIG.2

# FIG.3

# FIG.4

# FIG.5

FIG.6

78
61
71
62
63
64
65
66
67

FIG.7

60
71

# FIG. 8